# EUROPEAN PATENT SPECIFICATION

(11) **EP 1 933 011 B1**
(45) Date of publication and mention of the grant of the patent: **27.10.2010**
(21) Application number: 07023695.5
(22) Date of filing: 06.12.2007
(51) Int. Cl.: F01N 3/022, F01N 3/28, F01N 3/08, F01N 3/30, F01N 3/24

(54) **Motorcycle**
Motorrad
Motocyclette

(30) Priority: 15.12.2006 JP 2006338290; 06.12.2006 JP 2006330004
(43) Date of publication of application: 18.06.2008
(73) Proprietor: Yamaha Hatsudoki Kabushiki Kaisha, Iwata-shi, Shizuoka 438-8501 (JP)
(72) Inventor: Kajiwara, Kenichi, Iwata-shi, Shizuoka-ken 438-8501 (JP); Igarashi, Takeshi, Iwata-shi, Shizuoka-ken 438-8501 (JP); Ikusue, Masato, Iwata-shi, Shizuoka-ken 438-8501 (JP)
(74) Representative: Grünecker, Kinkeldey, Stockmair & Schwanhäusser Anwaltssozietät

(56) References cited:
- JP-A- 4 140 413
- JP-A- 6 026 375
- JP-A- 56 135 708
- JP-A- 59 005 824
- JP-A- 60 022 017

## Description

The present invention relates to a straddle type vehicle according to the preamble of independent claim 1. Such a vehicle can be taken from the prior art document JP 60 022017 A. According to said prior art vehicle the casing for accommodating the catalyst is located below the frame members to which the engine is fixed.

Normally, exhaust gases from an engine are released to the atmosphere. It is desired to purify the exhaust gases as clean as possible before the release of the exhaust gases. Conventionally, therefore, a catalyst (catalyzer) is disposed midway of an exhaust conduit through which the exhaust gases flow so that the exhaust gases are purified by the catalyst (for example, see Patent Document 1).
Patent Document 1: JP 06026375

However, because the conventional art employs a structure in which the catalyst is disposed midway of the exhaust conduit extending in a fore to aft direction below a crankcase of the engine, the catalyst protrudes downward greatly beyond the crankcase. It is, therefore, difficult to keep the minimum height of the vehicle body from the ground. Thus, there arises a problem that a layout design of the catalyst is difficult.

The present invention is made under the circumstances and it is an object of the present invention to provide a straddle type vehicle as indicted above that can easily keep the minimum height of the vehicle body from the ground and can make a layout design of a catalyst be simple although the catalyst is disposed below the crankcase.

According to the present invention said object is solved by straddle type vehicle having the features of independent claim 1. Preferred embodiments are laid down in the dependent claims.

Accordingly, it is provided a straddle type vehicle comprising: an engine including a crankcase and a cylinder block; an exhaust conduit which has an upstream end coupled with the cylinder block and which extends downward in front of the engine from the upstream end and further rearward below the crankcase; and a first catalyst disposed in the exhaust conduit at a position below the crankcase for purifying exhaust gases flowing through the exhaust conduit, wherein the catalyst is formed to be low-profile, a size of the catalyst in width being greater than that in height, wherein the first catalyst is disposed between right and left frames to which the engine is fixed.

Preferably, the size of the first catalyst in height is generally equal to an outer diameter of the exhaust conduit.

Still further, preferably a second catalyst is disposed in the exhaust conduit at a position downstream of the first catalyst.

Yet further still, preferably a secondary air introducing conduit is connected to the exhaust conduit at a location between the first catalyst and the second catalyst.

Therein, it is beneficial if a bottom line of a portion of the exhaust conduit extending below the crankcase in a side view and a bottom line of the first catalyst in the side view are positioned generally on the same straight line.

It is further beneficial if a center line of a portion of the exhaust conduit coupled with an exhaust gas inlet port of the first catalyst through which the exhaust gases enter the first catalyst from the portion of the exhaust conduit and a center line of another portion of the exhaust conduit coupled with an exhaust gas outlet port of the first catalyst through which the exhaust gases go out from the first catalyst to the another portion of the exhaust conduit are set off from each other, and the another portion of the exhaust conduit coupled with the exhaust gas outlet port is deflected to one side of a vehicle body in a width direction thereof.

In the following, the present invention is explained in greater detail with respect to several embodiments thereof in conjunction with the accompanying drawings, wherein:
- FIG. 1: is an elevational view, showing a motorcycle configured in accordance with an embodiment of the present teaching,
- FIG. 2: is an enlarged view, showing a frame, an exhaust conduit, a front catalyst, a rear catalyst, etc. of FIG. 1,
- FIG. 3: is a front elevational view, showing the frame, the exhaust conduit, the front catalyst, etc. of FIG. 2,
- FIG. 4: is a bottom plan view, showing the frame, the exhaust conduit, the front catalyst, the rear catalyst, etc. of FIG. 2,
- FIG. 5: is a side elevational view, showing the exhaust conduit, the front catalyst and the rear catalyst of FIG. 1 solely in an enlarging manner,
- FIG. 6: is a top plan view, showing the exhaust conduit, the front catalyst and the rear catalyst of FIG. 1 solely in the enlarging manner,
- FIG. 7: is an enlarged perspective view, showing the front catalyst of FIG. 6 solely,
- FIG. 8: is a cross sectional view, showing the front catalyst, etc. of FIG. 6 in the enlarging manner, and
- FIG. 9: is a cross sectional view of the front catalyst, taken along the line VIII-VIII of FIG. 8.

### Description of Reference Numerals and Symbols:

1: motorcycle (straddle type vehicle)
2: secondary air introducing conduit
10: frame
12: left frame
13: right frame
20: engine
21: crankcase
22: cylinder block
30: exhaust conduit
33A, 34A, 40A: line
40: front catalyst (catalyst)
43: exhaust gas inlet port
44: exhaust gas outlet port
50: rear catalyst (another catalyst)

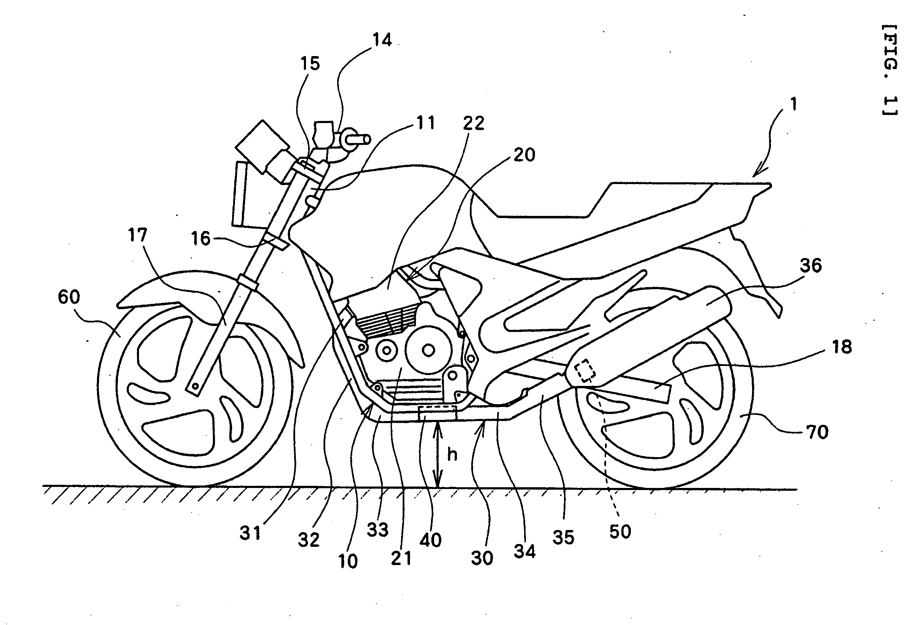

With reference to FIGs. 1 to 7, an embodiment will be described, exemplifying a case that a straddle type vehicle of the embodiment according to the present teaching is applied to a motorcycle. A motorcycle 1 of the embodiment of the present teaching is structured to include a frame 10, an engine 20, an exhaust conduit 30, a front catalyst 40 and a rear catalyst 50.

The frame 10 has a head pipe 11, a left frame 12 formed with a framework which generally has a parallelogram shape, and a right frame 13 formed with another framework shaped as a parallelogram, similarly to the left frame 12.

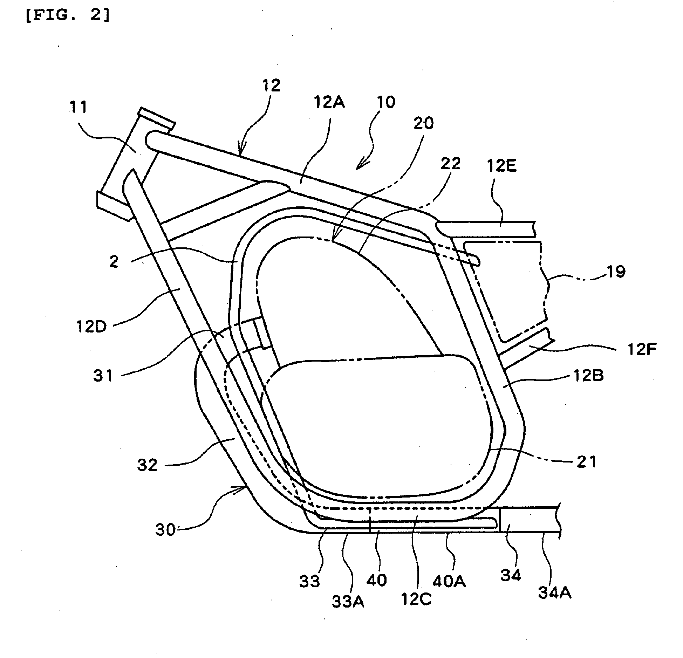

As shown in FIG. 2, the left frame 12 is structured to include: a first frame section 12A, whose front end is coupled with the top end of a head pipe 11, extending obliquely downward rearward from the front end; a second frame section 12B curvedly extending in a dog-leg shape from the rear end of the first frame section 12A to extend obliquely downward rearward, and having a lower end portion which curvedly extends obliquely downward forward; a third frame section 12C curvedly extending forward in a generally horizontal direction from the lower end portion of the second frame section 12B; and a fourth frame section 12D whose top end is coupled with the bottom end of the head pipe 11.

The left frame 12 has a seat rail 12E, whose front end is coupled with the boundary portion between the first frame section 12A and the second frame section 12B, extending rearward generally in the horizontal direction from the front end; and a back stay 12F whose front end is coupled with a middle portion of the second frame section 12B in a longitudinal direction, extending obliquely upward rearward. The rear end of the seat rail 12E is coupled with a mid portion of the back stay 12F.

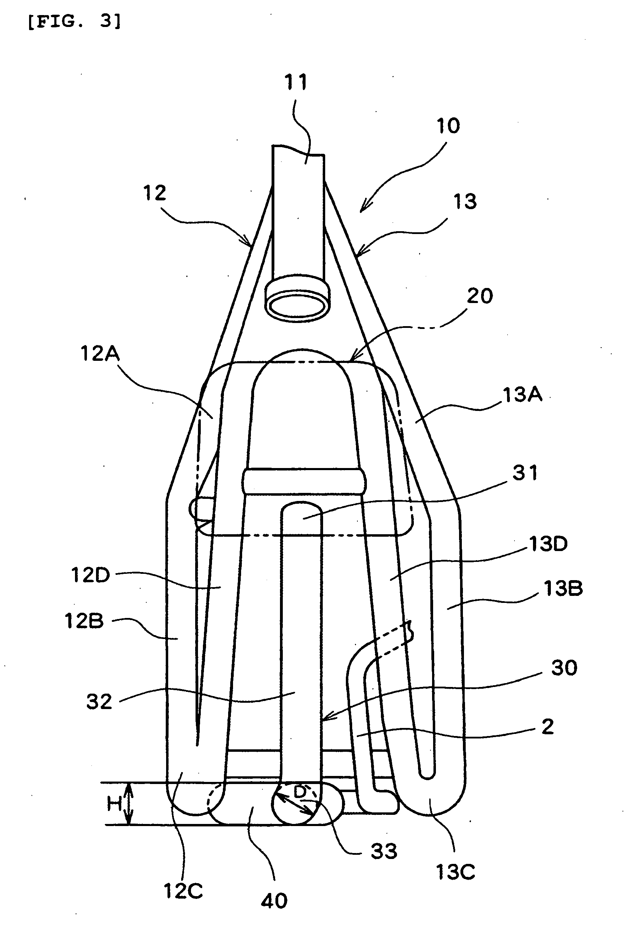

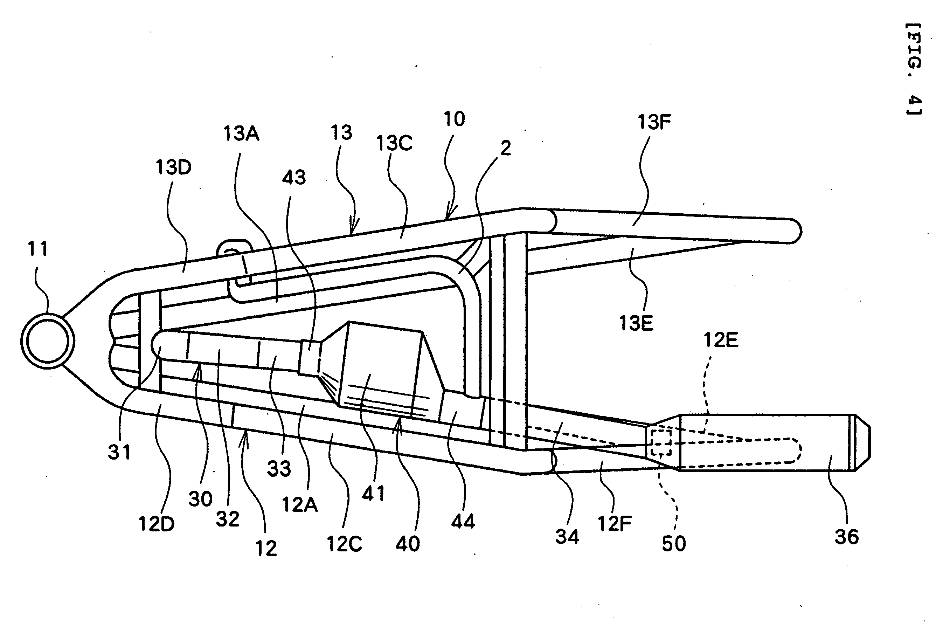

As shown in FIGs. 3 and 4, the right frame 13 has a first frame section 13A, a second frame section 13B, a third frame section 13C, a fourth frame section 13D, a seat rail 13E and a back stay 13F, similarly to the left frame 12.

As shown in FIG. 1, a pivot shaft (not shown) attached to handlebars 14 is inserted into the head pipe 11 for pivotal movement. The pivot shaft of the handlebars 14 is fixed to respective central portions of an upper bracket 15 and an lower bracket 16 each extending in width direction. Respective top end portions of right and left front forks 17 (only one of them is shown) are inserted into right and left ends of the brackets 15, 16 and fixed thereto. A front wheel 60 is coupled with the bottom end portions of the respective front forks 17 for rotation.

The front ends of a swing arm 18 are coupled with the second frame section 12B of the left frame 12 and the second frame section 13B of the right frame 13 to be supported for swing movement. A rear wheel 70 is coupled with the rear ends of the swing arm 18 for rotation. Additionally, an air cleaner 19 is disposed between the seat rails 12E and the back stays 12F of the frame 10.

The engine 20 is disposed in an inside space defined by the left frame 12 and the right frame 13 each generally formed with a framework having a rectangular shape (see FIG. 2). The engine 20 is mounted on the frames 12, 13 by being suspended. As shown in FIGs. 1 and 2, the engine 20 is structured to include a crankcase 21 and a cylinder block 22 positioned on the crankcase 21.

As shown in FIG. 2 through FIG. 6, the exhaust conduit 30 has a first pipe 31 arcuately extending forward from the cylinder block 22 of the engine 20, a second pipe 32 extending obliquely downward rearward from the first pipe 31 and partially overlapping with the fourth frame section 12D (13D) of the frame 10 in a side view, a third pipe 33 extending rearward from the second pipe generally in the horizontal direction to be connected to the front catalyst 40 and partially overlapping with the third frame section 12C (13C) of the frame 10 in the side view, a fourth pipe 34 extending rearward from the front catalyst generally in the horizontal direction, a fifth pipe 35 curvedly extending obliquely upward rearward, and a muffler 36 connected to the fifth pipe 35.

The exhaust conduit 30 is to discharge exhaust gases externally from the through the front catalyst 40, the rear catalyst 50 and the muffler 36.

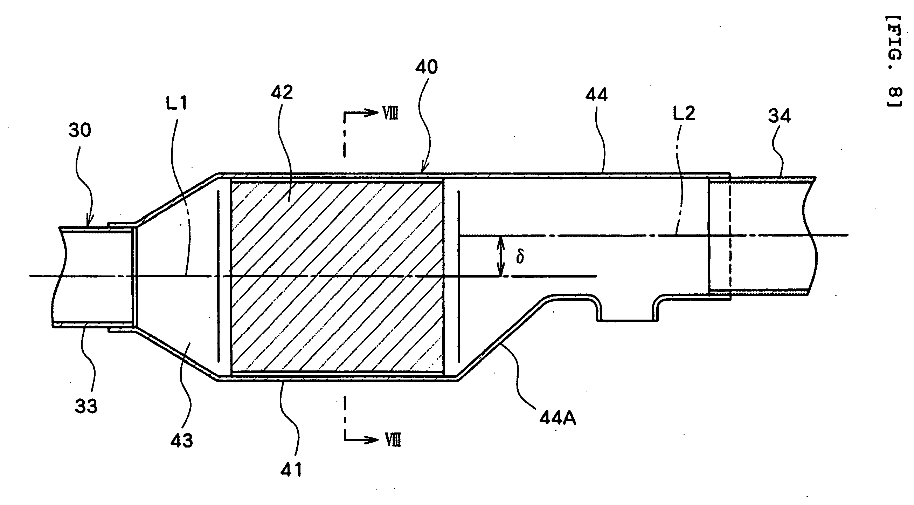

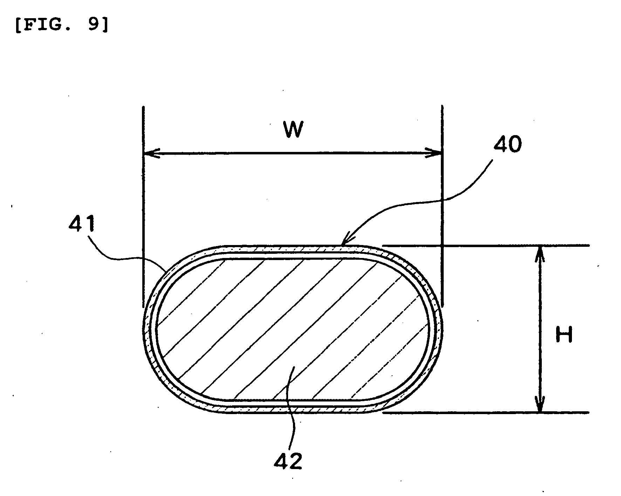

The front catalyst 40 is positioned below the crankcase 21 and between the third pipe 33 and the fourth pipe 34 of the exhaust pipe 30. As shown in FIGs. 8 and 9, the front catalyst 40 includes a tubular casing 41, whose cross section has an elliptic shape (ellipse configuration), extending in the fore-to-aft direction; and a catalyst body 42 contained in the casing 41.

The casing 41 has an exhaust gas inlet port 43 which is a tubular body tapered forward from the upstream portion of the casing 41 and extending rearward to be unitarily formed with the casing 41. Exhaust gases from the third pipe 33 of the exhaust conduit 30 flow into the exhaust gas inlet port 43. Also, the casing 41 has an exhaust gas outlet port 44 unitarily formed with the casing 41 and extending rearward as a tubular body from a downstream portion of the casing 41 through a sloped portion 44A. The exhaust gas outlet port 44 is to let the exhaust gases which have flowed through the catalyst 40 go out to the fourth pipe 34 of the exhaust conduit 30.

In this regard, as shown in FIG. 8, the center line L1 of the third pipe 33 of the exhaust conduit 30 connected to the exhaust gas inlet port 43 and the center line L2 of the fourth pipe 34 of the exhaust conduit 30 connected to the exhaust gas outlet port 44 are set off from each other by a distance δ in the right and left direction. The fourth pipe 34 of the exhaust conduit 30 is deflected to one side (left side) in the width direction (right and left direction) of the vehicle body.

As shown in FIG. 3, the front catalyst 40 is positioned between the third frame section 12C of the left frame 12 and the third frame section 13C of the right frame 13. As shown in FIG. 2, the top portion of the front catalyst 40 overlaps with the third frame section 12C (13C) in the side view.

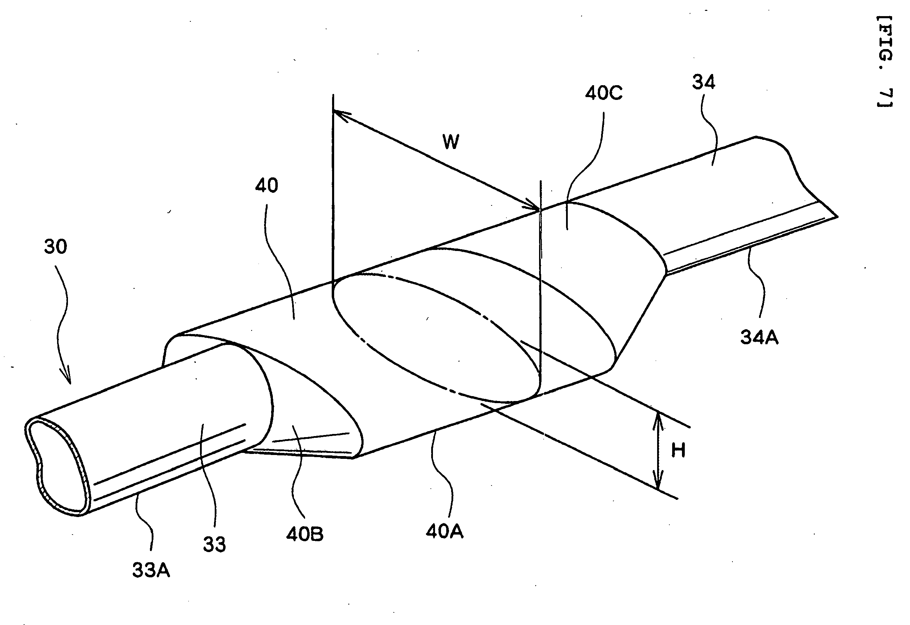

In this regard, as shown in FIGs. 7 and 9, the front catalyst 40 is formed to have a low-profile shape whose width W is greater than the height H. As shown in FIG. 3, the height H of the front catalyst 40 is generally equal to the outer diameter D of the third pipe 33 and to the outer diameter (not shown) of the fourth pipe 34 of the exhaust conduit 30.

The bottom lines 33A, 34A of the third pipe 33 and the fourth pipe 34 of the exhaust conduit 33 extending below the crankcase 21 in the side view and the bottom line 40A of the catalyst 40 in the side view are positioned generally on the same straight line.

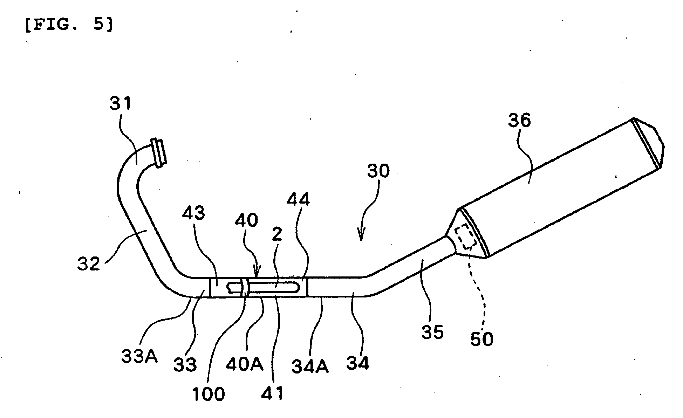

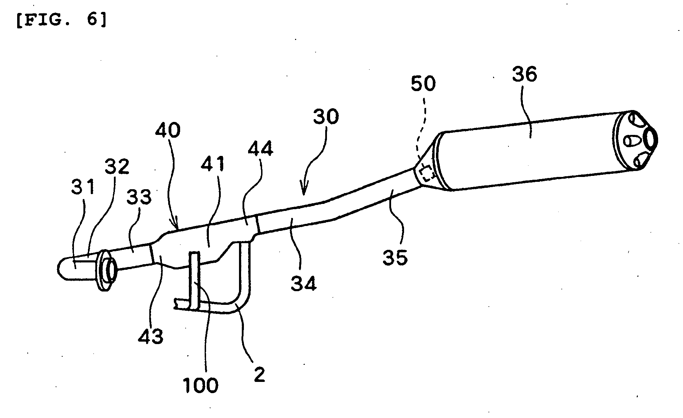

The rear catalyst 50 is disposed in the muffler 36 of the exhaust conduit 30 positioned downstream of the front catalyst 40. As shown in FIGs. 5 and 6, the downstream end of a secondary air introducing conduit 2 is connected to the exhaust gas outlet port 44 of the exhaust conduit 30 positioned between the front catalyst 40 and the rear catalyst 50. The upstream end of the secondary air introducing conduit 2 is connected to the air cleaner 19 (see FIG. 2). The secondary air introducing conduit 2 introduces external air passing through the air cleaner 19 to the rear catalyst 50 through the fourth pipe 34 to enhance the burning efficiency of the exhaust gases in the rear catalyst 50. Additionally, a downstream portion of the secondary air introducing conduit 2 is provided with a stay 100 whereby the downstream portion is supported by the front catalyst 40. The front catalyst 40 and the rear catalyst 50 both burn harmful components (HC, NOx, etc.) contained in the exhaust gases released from the engine 20 to purify the exhaust gases.

In the embodiment as thus constructed, the front catalyst 40 is positioned below the crankcase 21 of the engine 20 and the front catalyst 40 is formed to have a low-profile shape whose height h is less than the width W thereof. Therefore, the front catalyst 40 can be prevented from protruding downward beyond the third pipe 33 and the fourth pipe 34 of the exhaust conduit 30 extending below the crankcase 21 in the horizontal direction, and the minimum height H (see FIG. 1) of the vehicle body from the ground can be easily ensured. Also, the layout design of the front catalyst 40 can be made easily.

Additionally, in the embodiment, the motorcycle 1 is described as an example of the straddle type vehicle. The present teaching, however, is not limited to the motorcycle and can be applied to other straddle type vehicles such as, for example, a three-wheeled vehicle and a sand buggy.

The description above discloses a straddle type vehicle configured in accordance with an embodiment of the present teaching and for resolving the problem of the conventional art and includes: an engine including a crankcase and a cylinder block disposed thereon; an exhaust conduit which has an upstream end coupled with the cylinder block and extends downward in front of the engine from the upstream end and further rearward below the crankcase; and a catalyst disposed midway of the exhaust conduit and below the crankcase for purifying exhaust gases flowing through the exhaust conduit. The catalyst is formed to be low-profile, in which the size of the catalyst in width is greater than that in height.

According to the present teaching as constructed in the manner described, the cross sectional shape of the catalyst can be low-profile, where the size in width is greater than the size in height. Therefore, to the extent that the cross sectional shape of the catalyst is made small in height, the minimum height of the vehicle body including the catalyst and the exhaust conduit from the ground can be easily ensured.

In another embodiment of the present teaching, the size of the catalyst in height can be generally equal to the outer diameter of the exhaust conduit. According to this construction, because the size of the catalyst in height can be generally equal to the outer diameter of the exhaust conduit, the catalyst does not protrude below the exhaust conduit, and the minimum height of the vehicle body including the catalyst and the exhaust conduit from the ground can be more easily ensured.

In another embodiment of the present teaching, the catalyst can be disposed between right and left frames to which the engine is fixed. According to this construction, because the catalyst can be positioned in a space defined between the right and left frames, the layout design of the catalyst can be easily made. Also, because the catalyst is disposed between the right and left frames, the right and left frames can protect the catalyst from external shocks.

In a further embodiment of the present teaching, another catalyst can be disposed midway of the exhaust conduit to be positioned downstream of the catalyst. According to this construction, the exhaust gases discharged from the exhaust conduit can be more efficiently purified using those two catalysts.

In a further embodiment of the present teaching, a secondary air introducing conduit can be connected to the exhaust conduit at a location between the catalyst and the another catalyst. According to this construction, because the secondary air can be introduced into the exhaust conduit through the secondary air introducing conduit, the exhaust gases can be more efficiently purified.

In a further embodiment of the present teaching, the bottom line of a portion of the exhaust conduit extending below the crankcase in the side view and the bottom line of the catalyst in the side view can be positioned generally on the same straight line. According to this construction, the catalyst can be surely prevented from protruding downward from the exhaust conduit disposed below the crankcase, and the minimum height of the vehicle body from the ground can be more easily ensured.

In a further embodiment of the present teaching, the center line of a portion of the exhaust conduit coupled with the exhaust gas inlet port of the catalyst through which the exhaust gases enter the catalyst from the portion of the exhaust conduit and the center line of another portion of the exhaust conduit coupled with the exhaust gas outlet port of the catalyst through which the exhaust gases go out from the catalyst to the another portion of the exhaust conduit can be set off from each other, and the another portion of the exhaust conduit coupled with the exhaust gas outlet port can be deflected to one side of a vehicle body in the width direction thereof.

According to this construction, because, in a situation that a muffler placed at a location on the outlet port side is deflected to the one side of the vehicle body in the width direction thereof, the center line of the exhaust conduit coupled with the exhaust gas outlet port of the catalyst is deflected to the one side of the vehicle body in the width direction relative to the center line of the exhaust conduit coupled with the exhaust gas inlet port, the muffler and the exhaust gas outlet port can be easily coupled with each other through a portion of the exhaust conduit. The layout design of the exhaust conduit including the muffler can be easily made.

According to the straddle type vehicle of the present teaching, because the cross sectional shape of the catalyst can be formed to be low-profile, that is, the size of the catalyst in width is greater than the size of the catalyst in height, the minimum height of the vehicle body from the ground can be easily ensured and the layout design of the catalyst can be easily made, although the catalyst is disposed below the crankcase.

The description above further discloses an embodiment of a straddle type vehicle comprising: an engine including a crankcase and a cylinder block disposed thereon; an exhaust conduit which has an upstream end coupled with the cylinder block and extends downward in front of the engine from the upstream end and further rearward below the crankcase; and a catalyst disposed midway of the exhaust conduit and below the crankcase for purifying exhaust gases flowing through the exhaust conduit, characterized in that the catalyst is formed to be low-profile, a size of the catalyst in width being greater than that in height.

Further, the size of the catalyst in height may be generally equal to an outer diameter of the exhaust conduit.

Further, the catalyst may be disposed between right and left frames to which the engine is fixed.

Further, another catalyst may be disposed midway of the exhaust conduit to be positioned downstream of the catalyst.

Further, a secondary air introducing conduit may be connected to the exhaust conduit at a location between the catalyst and the another catalyst.

Preferably, a bottom line of a portion of the exhaust conduit extending below the crankcase in a side view and a bottom line of the catalyst in the side view are positioned generally on the same straight line.

According to a preferred embodiment, a center line of a portion of the exhaust conduit coupled with an exhaust gas inlet port of the catalyst through which the exhaust gases enter the catalyst from the portion of the exhaust conduit and a center line of another portion of the exhaust conduit coupled with an exhaust gas outlet port of the catalyst through which the exhaust gases go out from the catalyst to the another portion of the exhaust conduit are set off from each other, and the another portion of the exhaust conduit coupled with the exhaust gas outlet port is deflected to one side of a vehicle body in a width direction thereof.

The description further discloses, in order to easily keep the minimum height of the vehicle body from the ground although the catalyst is disposed below a crankcase of an engine, an embodiment including a front catalyst 40 disposed below a crankcase 21 of an engine 20, wherein the front catalyst 40 is formed to be low-profile, that is, the size of the catalyst in height is less than that in width. Further, bottom surfaces 33A, 34A of third and fourth pipes 33, 34 of an exhaust conduit positioned below the crankcase 21 extend along the same plane as a bottom surface 40A of the front catalyst 40.

## Claims

1. Straddle type vehicle (1) comprising:
an engine (20) including a crankcase (21) and a cylinder block (22);
a frame (10) to which the engine (20) is fixed;
an exhaust conduit (30) which has a first pipe (31) with an upstream end coupled with the cylinder block (22) and which extends downward in front of the engine (20) from the upstream end and further rearward below the crankcase (21); and a first catalyst (40) disposed in the exhaust conduit (30) at a position below the crankcase (21) for purifying exhaust gases flowing through the exhaust conduit (30), wherein the catalyst (40) is formed to be low-profile, a size of the catalyst (40) in width being greater than that in height,
**characterized in that** said frame (10) comprises a right frame (13) having a right frame section (13C) and a left frame (12) having a left frame section (12C), the right frame section (13C) and the left frame section (12C) both extending at the bottom of the vehicle, wherein the engine (20) with the first pipe (31) of the exhaust conduit (30) is disposed in an inside space defined by the left frame (12) and the right frame (13), the first catalyst (40) is disposed between said right and left frame sections (13C,12C), and a top portion of said first catalyst (40) overlaps with said frame sections (13C,12C) in side view of the vehicle.

2. Straddle type vehicle according to claim 1, **characterized in that** the size of the first catalyst (40) in height is generally equal to an outer diameter of the exhaust conduit (30).

3. Straddle type vehicle according to claim 1 or 2, **characterized by** a second catalyst (50) which is disposed in the exhaust conduit (30) at a position downstream of the first catalyst (40).

4. Straddle type vehicle according to claim 3, **characterized by** a secondary air introducing conduit (2) which is connected to the exhaust conduit (30) at a location between the first catalyst (40) and the second catalyst (50).

5. Straddle type vehicle according to one of the claims 1 to 4, **characterized in that** a bottom line (35A,34A) of a portion of the exhaust conduit (30) extending below the crankcase (21) in a side view and a bottom line (40A) of the first catalyst (40) in the side view are positioned generally on the same straight line.

6. Straddle type vehicle according to one of the claims 1 to 5, **characterized in that** a center line (L1) of a portion (33) of the exhaust conduit (30) coupled with an exhaust gas inlet port (43) of the first catalyst (40) through which the exhaust gases enter the first catalyst (40) from the portion (33) of the exhaust conduit (30) and a center line (L2) of another portion (34) of the exhaust conduit (30) coupled with an exhaust gas outlet port (44) of the first catalyst (40) through which the exhaust gases go out from the first catalyst (40) to the another portion (34) of the exhaust conduit (30) are set off from each other, and the another portion (34) of the exhaust conduit (30) coupled with the exhaust gas outlet port (44) is deflected to one side of a vehicle body in a width direction thereof.

## Patentansprüche

1. Fahrzeug (1) vom Spreizsitz- Typ, aufweisen:
eine Brennkraftmaschine (20), die ein Kurbelgehäuse (21) und einen Zylinderblock (22) enthält;
einen Rahmen (10), an dem die Brennkraftmaschine (20) befestigt ist;
einen Auslassleitung (30), die ein erstes Rohr (31) hat, mit einem stromaufwärtigen Ende, gekuppelt mit dem Zylinderblock (22), und das sich nach unten vor der Brennkraftmaschine (20) von dem stromaufwärtigen Ende und weiter nach hinten unter das Kurbelgehäuse (21) erstreckt; und
einen ersten Katalysator (40), angeordnet in der Auslassleitung (30) an einer Position unter dem Kurbelgehäuse (21) zum Reinigen des Abgases, das durch die Auslassleitung (30) strömt, wobei der Katalysator (40) mit einem niedrigen Profil ausgebildet ist, wobei eine Abmessung des Katalysators (40) in der Breite größer als die in der Höhe ist,
**dadurch gekennzeichnet, dass** der Rahmen (10) aufweist einen rechten Rahmen (13), der einen rechten Rahmenabschnitt (13C) hat, und einen linken Rahmen (12), der einen linken Rahmenabschnitt (12C) hat, wobei sich der rechte Rahmenabschnitt (13C) und der linke Rahmenabschnitt (12C) beide an dem Boden des Fahrzeuges erstrecken, wobei die Brennkraftmaschine (20) mit dem ersten Rohr (31) der Auslassleitung (30) in einem Innenraum, gebildet durch den linken Rahmen (12) und den rechten Rahmen (13), angeordnet ist, der erste Katalysator (40) zwischen dem rechten und dem linken Rahmenabschnitt (13C, 12C) angeordnet ist, und ein oberster Abschnitt des ersten Katalysators (40) mit den Rahmenabschnitten (13C, 12C) in der Seitenansicht des Fahrzeuges überlappt.

2. Fahrzeug vom Spreizsitz- Typ nach Anspruch 1, **dadurch gekennzeichnet, dass** die Abmessung des ersten Katalysators (40) in der Höhe im Wesentlichen gleich zu einem Außendurchmesser der Auslassleitung (30) ist.

3. Fahrzeug vom Spreizsitz- Typ nach Anspruch 1 oder 2, **gekennzeichnet durch** einen zweiten Katalysator (50), der in der Auslassleitung (30) an einer Position stromab des ersten Katalysators (40) angeordnet ist.

4. Fahrzeug vom Spreizsitz- Typ nach Anspruch 1 oder 2, **gekennzeichnet durch** eine zweite Lufteinlassleitung (2), die mit der Auslassleitung (30) an einem Ort zwischen dem ersten Katalysator (40) und dem zweiten Katalysator (50) verbunden ist.

5. Fahrzeug vom Spreizsitz- Typ nach einem der Ansprüche 1 bis 4, **dadurch gekennzeichnet, dass** eine Bodenlinie (35A, 34A) eines Abschnittes der Auslassleitung (30), der sich unter dem Kurbelgehäuse (21) in einer Seitenansicht erstreckt, und eine Bodenlinie (40A) des ersten Katalysators (40) in der Seitenansicht, im Wesentlichen auf derselben geraden Linie positioniert sind.

6. Fahrzeug vom Spreizsitz- Typ nach einem der Ansprüche 1 bis 5, **dadurch gekennzeichnet, dass** eine Mittellinie (L1) eines Abschnittes (33) der Auslassleitung (30), gekuppelt mit einer Abgas- Einlassöffnung (43) des ersten Katalysators (40), durch den die Abgase in den ersten Katalysator (40) von dem Abschnitt (33) der Auslassleitung (30) eintreten, und eine Mittellinie (L2) eines weiteren Abschnittes (34) der Auslassleitung (30), gekuppelt mit einer Abgas- Auslassöffnung (44) des ersten Katalysators (40), den die die Abgase aus dem ersten Katalysator (40) zu dem weiteren Abschnitt (34) der Auslassleitung (30) strömen, voneinander versetzt sind und der weitere Abschnitt (34) der Auslassleitung (30), gekuppelt mit der Abgas- Auslassöffnung (44) nach einer Seite der Fahrzeugkarosserie in Richtung nach deren Breite abgelenkt ist.

## Revendications

1. Véhicule du type à enfourcher (1) comprenant :
un moteur (20) comportant un carter-moteur (21) et un bloc-cylindres (22) ;
un cadre (10) auquel le moteur (20) est fixé ;
un conduit d'échappement (30) qui a un premier tuyau (31) avec une extrémité amont reliée au bloc-cylindres (22) et qui s'étend vers le bas devant le moteur (20) à partir de l'extrémité amont, et se poursuit vers l'arrière sous le carter-moteur (21) ; et un premier catalyseur (40) disposé dans le conduit d'échappement (30), à un endroit situé sous le carter-moteur (21), pour purifier les gaz d'échappement qui passent dans le conduit d'échappement (30), le catalyseur (40) étant formé pour avoir un profil bas, et la taille du catalyseur (40) étant plus grande en largeur qu'en hauteur,
**caractérisé en ce que** le cadre (10) comprend un cadre droit (13) qui a une section de cadre droit (13C), et un cadre gauche (12) qui a une section de cadre gauche (12C), les sections de cadre droit (13C) et gauche (12C) s'étendant toutes les deux en bas du véhicule, étant précisé que le moteur (20) avec le premier tuyau (31) du conduit d'échappement (30) est disposé dans un espace intérieur défini par le cadre gauche (12) et le cadre droit (13), que le premier catalyseur (40) est disposé entre les sections de cadre droit et gauche (13C, 12C), et qu'une partie supérieure du premier catalyseur (40) empiète sur lesdites sections de cadre (13C, 12C), sur une vue latérale du véhicule.

2. Véhicule du type à enfourcher selon la revendication 1, **caractérisé en ce que** la taille du premier catalyseur (40) en hauteur est globalement égale à un diamètre extérieur du conduit d'échappement (30).

3. véhicule du type à enfourcher selon la revendication 1 ou 2, **caractérisé par** un second catalyseur (50) qui est disposé dans le conduit d'échappement (30) à un endroit situé en aval du premier catalyseur (40).

4. Véhicule du type à enfourcher selon la revendication 3, **caractérisé par** un conduit d'introduction d'air secondaire (2) qui est relié au conduit d'échappement (30) à un endroit situé entre le premier catalyseur (40) et le second catalyseur (50).

5. Véhicule du type à enfourcher selon l'une des revendications 1 à 4, **caractérisé en ce qu'**une ligne inférieure (35A, 34A) d'une partie du conduit d'échappement (30) qui s'étend sous le carter-moteur (21), sur une vue latérale, et une ligne inférieure (40A) du premier catalyseur (40), sur la vue latérale, sont placées globalement sur la même ligne droite.

6. Véhicule du type à enfourcher selon l'une des revendications 1 à 5, **caractérisé en ce qu'**un axe central (L1) d'une partie (33) du conduit d'échappement (30) reliée à un orifice d'admission de gaz d'échappement (43) du premier catalyseur (40) par lequel les gaz d'échappement entrent dans le premier catalyseur (40), à partir de la partie (33) du conduit d'échappement (30), et un axe central (L2) d'une autre partie (34) du conduit d'échappement (30) reliée à un orifice de sortie de gaz d'échappement (44) du premier catalyseur (40) par lequel les gaz d'échappement sortent du premier catalyseur (40) vers ladite autre partie (34) du conduit d'échappement (30) sont décalés l'un par rapport à l'autre, et ladite autre partie (34) du conduit d'échappement (30) reliée à l'orifice de sortie de gaz d'échappement (44) est déviée vers un côté d'un corps de véhicule, dans le sens de la largeur de celui-ci.
